# EUROPEAN PATENT APPLICATION

(11) **EP 4 181 274 A1**
(43) Date of publication of application: **17.05.2023**
(21) Application number: 21903706.6
(22) Date of filing: 26.11.2021
(51) Int. Cl.: H01M 10/647, H01M 10/653, H01M 50/224, H01M 50/231, H01M 50/211

(54) **BATTERY MODULE AND BATTERY PACK INCLUDING SAME**

(30) Priority: 10.12.2020 KR 20200172059
(71) Applicant: LG Energy Solution, Ltd., Seoul 07335 (KR)
(72) Inventor: KIM, Bosung, Daejeon 34122 (KR); HWANG, Sungtack, Daejeon 34122 (KR)
(74) Representative: Goddar, Heinz J.
(86) International application number: PCT/KR2021/017582
(87) International publication number: WO 2022/124660

(57) **Abstract**

A battery module includes: a battery cell stack in which a plurality of battery cells is stacked; a module frame which surrounds the battery cell stack and has an opening portion formed on a lower side; and a thermally conductive resin layer which is formed in the opening portion and is in contact with the battery cell stack, in which the module frame includes an upper surface covering an upper portion of the battery cell stack, and a pair of side portions extending from both sides of the upper surface, and the opening portion is surrounded by lower short sides of the pair of side portions and a pair of rod portions formed to cross between the pair of side portions at both ends of the battery cell stack.

## Description

### [Technical Field]

### CROSS-REFERENCE TO RELATED APPLICATION

This application claims priority to and the benefit of Korean Patent Application No. 10-2020-0172059 filed in the Korean Intellectual Property Office on December 10, 2020, the entire contents of which are incorporated herein by reference.

The present invention relates to a battery module and a battery pack including the same, and more particularly, to a battery module with improved cooling performance and a battery pack including the same.

### [Background Art]

In modern society, as the use of portable devices, such as mobile phones, notebook computers, camcorders, and digital cameras, has become commonplace, the development of technologies related to the mobile devices becomes active. Further, a rechargeable secondary battery is a measure to solve the air pollution of existing gasoline vehicles that use fossil fuels, and is used as a power source of an Electric Vehicle (EV), a Hybrid Electric Vehicle (HEV), a Plug-in Hybrid Electric Vehicle (P-HEV), and the like, so that the need for development of the secondary battery is increasing.

Currently commercialized secondary batteries include nickel cadmium batteries, nickel hydride batteries, nickel zinc batteries, lithium secondary batteries, and the like, and among them, the lithium secondary battery is in the spotlight for its advantages in that charge and discharge are free because a memory effect is little, a self-discharge rate is very low, and energy density is very high, compared to the nickel-based secondary battery.

The lithium secondary battery mainly uses a lithium-based oxide and a carbon material as a positive electrode active material and a negative electrode active material, respectively. The lithium secondary battery includes an electrode assembly in which a positive electrode plate and a negative electrode plate, to which the positive electrode active material and the negative electrode active material are applied, respectively, are disposed with a separator interposed therebetween, and a battery case that seals and accommodates the electrode assembly together with an electrolyte.

In general, the lithium secondary battery may be classified into a can-type secondary battery in which the electrode assembly is embedded in a metal can, and a pouch-type secondary battery in which the electrode assembly is embedded in a pouch of an aluminum laminate sheet, according to a shape of the exterior material.

In the case of the secondary batteries used in small devices, two or three battery cells are disposed, but in the case of the secondary batteries used in middle and large devices, such as automobiles, a battery module in which the plurality of battery cells is electrically connected is used. In the battery module, the plurality of battery cells is connected to each other in series or in parallel to form a battery cell stack, so that capacity and output are improved. Further, one or more battery modules may be mounted together with various control and protection systems, such as a Battery Management System (BMS) and a cooling system, to form a battery pack.

When a temperature of the secondary battery increases higher than an appropriate temperature, performance of the secondary battery may be degraded and there is a risk of explosion or ignition in severe cases. In particular, in a battery module or a battery pack including a plurality of secondary batteries, that is, battery cells, heat from the plurality of battery cells is added up in a narrow space, so that the temperature may rise more rapidly and severely. In other words, in the case of a battery module in which a plurality of battery cells is stacked and a battery pack equipped with a battery module, high output may be obtained, but it is not easy to remove heat generated from the battery cells during charging and discharging. If the heat dissipation of the battery cell is not performed properly, the deterioration of the battery cell is accelerated and the lifespan is shortened, and the possibility of explosion or ignition increases.

Moreover, in the case of a battery module included in a vehicle battery pack, the battery module is frequently exposed to direct sunlight and may be placed in high temperature conditions, such as summer or desert areas.

Therefore, when the battery module or battery pack is configured, it can be said that it is very important to secure stable and effective cooling performance.

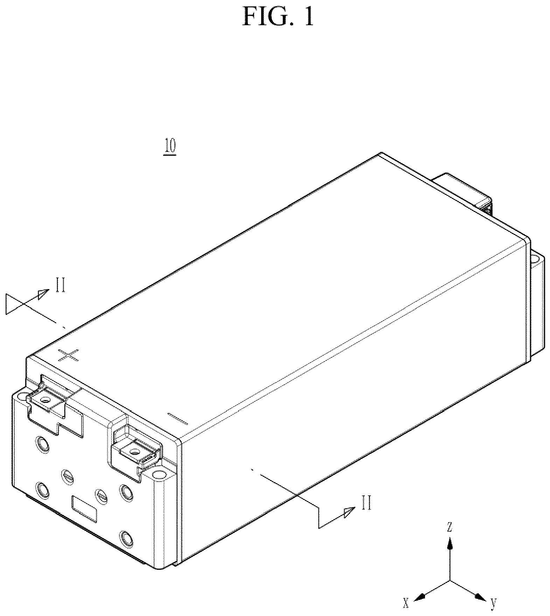

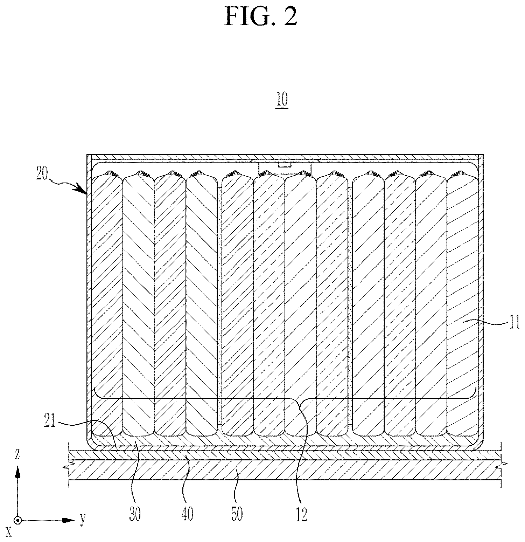

FIG. 1 is a perspective view of a battery module in the related art, and FIG. 2 is a cross-sectional view taken along line II-II' of FIG. 1. In particular, FIG. 2 further illustrates a heat transfer member and a pack frame positioned under the battery module.

Referring to FIGS. 1 and 2, in a battery module 10 in the related art, a plurality of battery cells 11 is stacked to form a battery cell stack 12, and the battery cell stack 12 is accommodated in a module frame 20.

As described above, since the battery module 10 includes a plurality of battery cells 11, the battery module 10 generates a large amount of heat during charging and discharging. As a cooling means, the battery module 10 may include a thermally conductive resin layer 30 positioned between the battery cell stack 12 and a bottom portion 21 of the module frame 20. In addition, when the battery module 10 is mounted on a pack frame 50 including a heat sink to form a battery pack, the heat transfer member 40 and the pack frame 50 are sequentially positioned under the battery module 10. The heat transfer member 40 may be a heat dissipation pad. The pack frame 50 may have a refrigerant passage formed therein to act as a heat sink.

Heat generated from the battery cell 11 passes through the thermally conductive resin layer 30, the bottom portion 21 of the module frame 20, the heat transfer member 40, and the pack frame 50 in order to be transmitted to the outside of the battery module 10.

However, in the case of the battery module 10 in the related art, the foregoing heat transfer path is complicated, so that it is difficult to effectively transfer the heat generated from the battery cell 11. The module frame 20 itself may deteriorate the thermal conduction characteristics. In addition, a fine air layer, such as an air gap, that may be formed between the module frame 20, the heat transfer member 40, and the pack frame 50 may be a factor to reduce heat transfer characteristics.

Since other demands, such as miniaturization and capacity increase, are continuing for battery modules, it is practically necessary to develop a battery module that can satisfy these various requirements while improving cooling performance

### [Disclosure]

### [Technical Problem]

The problem to be solved by the present invention is to provide a battery module having improved cooling performance by simplifying a heat transfer path, and a battery pack including the same.

However, the problem to be solved in the exemplary embodiments of the present invention is not limited to the foregoing problem, and may be variously extended in the scope of the technical spirit included in the present invention.

### [Technical Solution]

A battery module according to an exemplary embodiment of the present invention includes: a battery cell stack in which a plurality of battery cells is stacked; a module frame which surrounds the battery cell stack and has an opening portion formed on a lower side; and a thermally conductive resin layer which is formed in the opening portion and is in contact with the battery cell stack, in which the module frame includes an upper surface covering an upper portion of the battery cell stack, and a pair of side portions extending from opposite sides of the upper surface to cover opposite side surfaces of the battery cell stack, and the opening portion is surrounded by a bottom edge of the pair of side portions and a pair of rod portions formed to cross between the pair of side portions at a bottom of the pair of side portions.

The thermally conductive resin layer may fill the opening portion.

The module frame may be made of an aluminum material.

The upper surface, the pair of side portions, and the pair of rod portions may be integrally formed.

A battery pack according to another exemplary embodiment of the present invention includes: the plurality of battery modules; and a pack frame configured to accommodate the plurality of battery modules.

The thermally conductive resin layer may be in contact with the pack frame through the opening portion.

Battery modules of the plurality of battery modules may be spaced apart from each other.

An area of the pack frame facing the plurality of battery modules may be larger than an area of the plurality of battery modules.

Heat generated from the battery cell stack may be directly transferred to the pack frame through the thermally conductive resin layer.

The thermally conductive resin layer may directly contact the battery module and the pack frame.

### [Advantageous Effects]

According to the exemplary embodiments of the present invention, it is possible to improve cooling performance of the battery module and the battery pack including the same by simplifying the heat transfer path by enabling heat to be directly transferred through the thermally conductive resin layer that is in direct contact with the battery cell stack through the opening portion at the lower side of the module frame. Further, it is possible to reduce the cost by removing the unnecessary cooling structure, and to increase the space utilization, thereby improving the capacity or output of the battery module.

The effects of the present invention are not limited to the foregoing effects, and other non-mentioned effects will be clearly understood by those skilled in the art from the description below.

### [Description of the Drawings]

FIG. 1 is a perspective view of a battery module in the related art.
FIG. 2 is a cross-sectional view taken along line II-II' of FIG. 1.
FIG. 3 is an exploded perspective view of a battery module according to an exemplary embodiment of the present invention.
FIG. 4 is a perspective view of a module frame included in the battery module of FIG. 3.
FIG. 5 is a cross-sectional view of an assembling state of the battery module of FIG. 3.
FIG. 6 is a perspective view of a battery pack according to an exemplary embodiment of the present invention.
FIG. 7 is a cross-sectional view taken along line A-A' of FIG. 6.

### [Mode for Invention]

In the following detailed description, only certain exemplary embodiments of the present invention have been shown and described, simply by way of illustration. However, the present invention can be variously implemented and is not limited to the following embodiments.

Accordingly, the drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

In addition, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is "on" a reference portion, the element is located above or below the reference portion, and it does not necessarily mean that the element is located "on" in a direction opposite to gravity.

In addition, unless explicitly described to the contrary, the word "comprise", and variations such as "comprises" or "comprising", will be understood to imply the inclusion of stated elements but not the exclusion of any other elements.

Further, in the entire specification, when it is referred to as "in a plane" it means when a target part is viewed from above, and when it is referred to as "in a cross-section", it means when the cross-section obtained by cutting a target part vertically is viewed from the side.

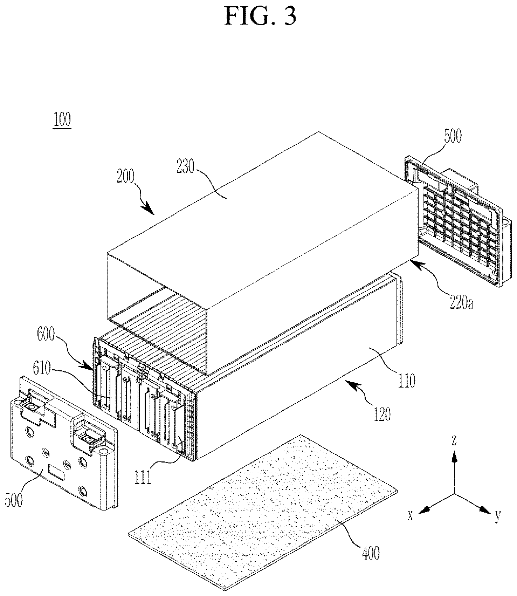

Hereinafter, a battery module according to an exemplary embodiment of the present invention will be described with reference to FIGS. 3 to 5.

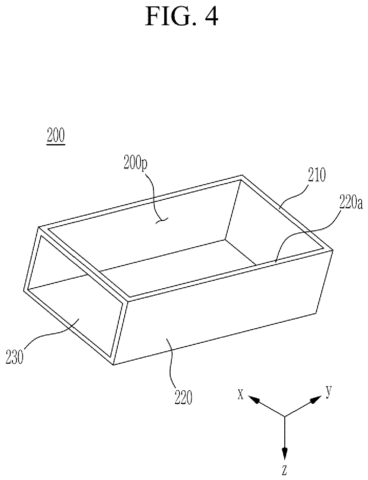

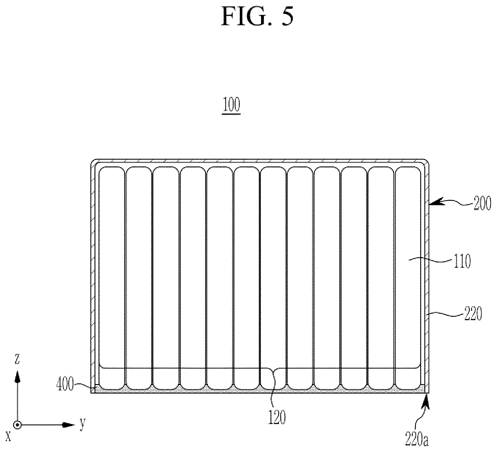

FIG. 3 is an exploded perspective view of a battery module according to an exemplary embodiment of the present invention. FIG. 4 is a perspective view of a module frame included in the battery module of FIG. 3. FIG. 5 is a cross-sectional view of an assembling state of the battery module of FIG. 3. That is, FIG. 5 is a diagram illustrating a cross-section cut in a direction parallel to the y-axis.

Referring to FIGS. 3 to 5, a battery module 100 according to an exemplary embodiment of the present invention includes a battery cell stack 120 in which a plurality of battery cells 110 is stacked, a module frame 200 surrounding the battery cell stack 120 and formed with an opening portion 200p on a lower side, and the thermally conductive resin layer 400 which is disposed in the opening 200p and in contact with the lower portion of the battery cell stack 120.

The battery cell stack 120 includes a plurality of battery cells 110 stacked in one direction, and the plurality of battery cells 110 may be stacked in the Y-axis direction as illustrated in FIG. 3. The battery cell 110 may be a pouch-type battery cell. An electrode lead 111 included in each battery cell 110 is a positive electrode lead or a negative electrode lead, and an end of the electrode lead 111 of each battery cell 110 may be bent in one direction, whereby the end of the electrode lead 111 may be in contact with an end of an electrode lead of another adjacent battery cell 110. The two electrode leads 111 which are in contact with each other may be fixed by welding and the like, and thus, the battery cells 110 inside the battery cell stack 120 may be electrically connected.

The module frame 200 has an opening portion 200p formed on the lower side (-z-axis direction), and thus, the battery cell stack 120 is exposed in the lower direction through the opening portion 200p. Specifically, the module frame 200 includes an upper surface 230 covering an upper surface of the battery cell stack 120 and a pair of side portions 220 extending from both sides of the upper surface 230 to cover the respective side surfaces of the battery cell stack 120. The pair of side portions 220 may be formed to extend downward from both ends of the upper surface 230 (that is, the -z-axis direction in the drawing).

On the other hand, the module frame 200 includes a pair of rod portions 210 formed to cross between the pair of side portions 220 at both ends of the lower short sides 220a of the pair of side portions 220

That is, in FIGS. 3 and 4, the module frame 200 includes the pair of rod portions 210 extending along the y-axis direction to cross between the pair of side portions 220 at both ends of the lower short side 220a, that is, at the ends in the x-axis direction. Accordingly, the lower surface of the battery cell stack 120 is not covered by the module frame 200, but is exposed by the opening portion 200p defined by the pair of lower short sides 220a and the pair of rod portions 210.

The thermally conductive resin layer 400 is formed in the opening portion 200p. The thermally conductive resin layer 400 may include a thermally conductive resin. The thermally conductive resin may include a thermally conductive adhesive material, and specifically, may include at least one of a silicone material, a urethane material, and an acrylic material. The thermally conductive resin is a liquid during application, but is cured after the application to serve to fix one or more battery cells 110 constituting the battery cell stack 120. In addition, it is possible to prevent overheating of the battery module by quickly transmitting the heat generated in the battery cell 110 to the outside of the battery module 100 due to the excellent thermally conductive characteristic.

On the other hand, in the exemplary embodiment of the present invention, although the case where the thermally conductive resin layer 400 is uniformly formed on the lower surface of the battery cell stack 120, the present invention is not limited thereto, and the thermally conductive resin layer 400 may be formed to be thicker in a region where heat generation is concentrated, or a plurality of thermally conductive resin layers may be disposed while being spaced apart from each other.

In the present exemplary embodiment, the thermally conductive resin layer 400 may be formed by applying the thermally conductive resin in the opening portion 200p or applying the thermally conductive resin to the pack frame 1000 that is in contact with the thermally conductive resin layer 400 as described below and then disposing the battery module 100 and curing the thermally conductive resin. In this process, the thermally conductive resin layer 400 is formed to fill the opening portion 200p. In particular, since the opening portion 200p is defined and partitioned by the pair of lower short sides 220a and the pair of rod portions 210 as described above, the pair of lower short sides 220a and the pair of rod portions 210 serve as a dam so that the thermally conductive resin is positioned before the thermally conductive resin is completely cured, thereby increasing mass productivity.

Meanwhile, the upper surface 230, the pair of side portions 220, and the pair of rod portions 210 constituting the module frame may be integrally formed. That is, the module frame 200 including the upper surface 230, the pair of side portions 220, and the pair of rod portions 210 may be manufactured by processing one metal member. Alternatively, an integrated module frame may be formed by forming the upper surface 230 and the pair of side portions 220 and then attaching the pair of rod portions 210 through welding by processing a plate-shaped metal member, but the present invention is not particularly limited thereto.

Meanwhile, the battery module 100 according to the present exemplary embodiment may include an end plate 500. The end plate 500 may be positioned on the front surface (x-axis direction) and the rear surface (-x-axis direction) of the battery cell stack 120 to cover the battery cell stack 120. The end plate 500 may physically protect the battery cell stack 120 and other electrical components from external impacts. An opening portion for exposing an LV connector or a terminal bus bar to the outside may be formed in the end plate 500, thereby guiding the external connection of the LV connector or the terminal bus bar and forming a low voltage (LV) connection or a high voltage (HV) connection of the battery module 100.

The module frame 200 and the end plate 500 may physically protect the battery cell stack 120 from external impacts or vibrations. To this end, the module frame 200 and the end plate 500 may include a metal material having predetermined strength. In particular, the module frame 200 may be made of an aluminum material having excellent heat dissipation performance and lightweight characteristics among metal materials. The module frame 200 and the end plate 500 are coupled by welding or the like in a state in which the corresponding corners are in contact with each other, and may receive the battery cell stack 120 therein.

Meanwhile, a bus bar frame 600 on which the bus bar 610 is mounted may be positioned between the battery cell stack 120 and the end plate 500. The electrode leads 111 of the battery cell 110 protrude in the front direction (y-axis direction) and the rear direction (-y-axis direction) directions of the battery cell stack 120, respectively, and the electrode leads 111 may pass through slits formed in the bus bar 610 or the bus bar frame 600. Thereafter, the electrode lead 111 may be bent and joined with the bus bar 610 by welding or the like. Although not specifically illustrated, an insulating cover for electrical insulation may be positioned between the bus bar frame 600 and the end plate 500.

As described above, the battery module 100 according to the exemplary embodiment of the present invention includes the opening portion 200p at the lower portion of the module frame 200 which accommodates the battery cell stack 120, and in particular, the opening portion 200p is surrounded by the lower short sides 220a of the pair of side portions and the pair of rod portions 210 and the thermally conductive resin layer 400 is formed within the opening portion 200p, thereby improving mass productivity, decreasing weight of the battery module 100 itself, and improving efficiency of heat transmission to the outside of the battery module 100 when a battery pack 1000 is configured as described below.

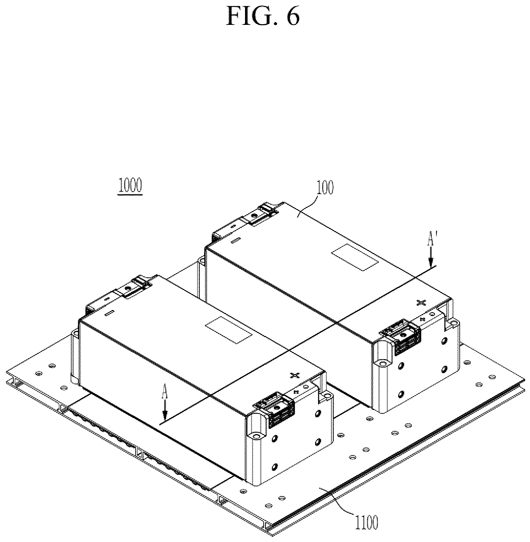

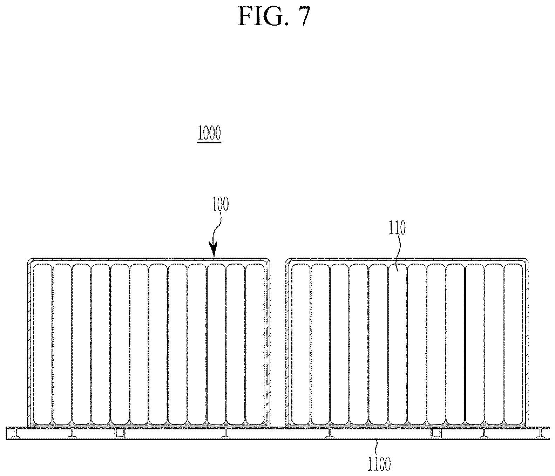

Hereinafter, the battery pack 1000 including the battery cell 100 will be described in detail with further reference to FIGS. 6 and 7.

FIG. 6 is a perspective view of a battery pack according to an exemplary embodiment of the present invention. FIG. 7 is a cross-sectional view taken along line A-A' of FIG. 6.

Referring to FIGS. 3, and 5 to 7, the battery pack 1000 according to the exemplary embodiment of the present invention includes the plurality of battery modules 100 and the pack frame 1100 that accommodates the battery modules 100.

First, the pack frame 1100 may be formed in a flat plate shape as illustrated in FIG. 6, but is not limited thereto, and the pack frame 1100 may further include a lateral wall portion surrounding the battery module 100, a partition wall formed between the plurality of battery modules 100, and the like. In addition, although not illustrated, a refrigerant flow path may be formed inside the pack frame 1100 to perform a heat dissipation function. In addition, an area of the pack frame 110 may be formed to be larger than an area of a lower portion of the plurality of battery modules 100, and accordingly, the pack frame 110 may accommodate additionally necessary components.

The battery module 100 may be received and fixed on the pack frame 1100. The plurality of battery modules 100 may be disposed while being spaced apart from each other. In this case, the thermally conductive resin layer 400 formed to be in contact with the battery cell stack 120 may be in direct contact with the pack frame 1100 through the opening portion 200p of the module frame 200.

As described with reference to FIGS. 1 and 2, in the case of the battery module 10 in the related art, the heat generated from the battery cell 11 is sequentially transferred to the thermally conductive resin layer 30, the bottom portion 21 of the module frame 20, the heat transfer member 40, and the pack frame 50. In this case, since the heat transfer path is complicated, it is difficult to effectively transmit heat generated from the battery cell 11, and a fine air layer, such as an air gap, that may be formed between each of the module frame 20, the heat transfer member 40, and the pack frame 50 may interfere with heat transfer.

On the other hand, in the battery pack 1000 according to the present exemplary embodiment, since the battery cell stack 120 is in contact with the thermally conductive resin layer 400 through the opening portion 200p of the module frame 200, and an opposite surface of the thermally conductive resin layer 400 is in contact with the pack frame 1100, heat generated from the battery cell 110 may be directly transferred to the thermally conductive resin layer 400 and the pack frame 1100. That is, the heat transfer path in the lower direction of the battery module 100 is simplified, and the possibility of generating an air layer, such as an air cap, may be greatly reduced. Accordingly, the cooling performance of the battery module 100 and the battery pack 1000 including the same may be improved.

In addition, since no heat transfer member other than the thermally conductive resin layer 400 is disposed between the battery module 100 and the pack frame 110, it is possible to reduce the cost by removing an unnecessary cooling structure. In addition, since the number of components in the height direction of the battery pack 1000 is reduced, space utilization may be increased, so that the capacity or output of the battery module may be increased.

In the present exemplary embodiment, terms indicating directions, such as front, rear, left, right, up, and down, are used, but these terms are for convenience of explanation only, and may vary depending on the location of the object or the position of the observer.

One or more battery modules according to the present exemplary embodiment described above may be mounted together with various control and protection systems, such as a battery management system (BMS) and a cooling system, to form a battery pack.

The battery module or battery pack may be applied to various devices. Specifically, the battery module or battery pack may be applied to transportation means, such as an electric bicycle, an electric vehicle, and a hybrid vehicle, but is not limited thereto, and the battery module or battery pack may be applied to various devices that can use a secondary battery.

Although an exemplary embodiment of the present invention has been described in detail, the scope of the present invention is not limited by the embodiment. Various changes and modifications using the basic concept of the present invention defined in the accompanying claims by those skilled in the art shall be construed to belong to the scope of the present invention.

### <Description of Reference Numeral>

100: Battery module
200: Module frame
200p: Opening portion
210: Pair of rod portions
220: Pair of side portions
400: Thermally conductive resin layer
1000: Battery pack
1100: Pack frame

## Claims

1. A battery module, comprising:
a battery cell stack in which a plurality of battery cells is stacked;
a module frame which surrounds the battery cell stack and has an opening portion formed on a lower side; and
a thermally conductive resin layer which is formed in the opening portion and is in contact with the battery cell stack,
wherein the module frame includes an upper surface covering an upper portion of the battery cell stack, and a pair of side portions extending from opposite sides of the upper surface to cover opposite side surfaces of the battery cell stack, and
wherein the opening portion is surrounded by a bottom edge of the pair of side portions and a pair of rod portions, each rod portion formed to cross between the pair of side portions at a bottom of the pair of side portions.

2. The battery module of claim 1, wherein:
the thermally conductive resin layer fills the opening portion.

3. The battery module of claim 2, wherein:
the module frame is made of an aluminum material.

4. The battery module of claim 1, wherein:
the upper surface, the pair of side portions, and the pair of rod portions are integrally formed.

5. A battery pack, comprising:
the plurality of battery modules of claim 1; and
a pack frame configured to accommodate the plurality of battery modules.

6. The battery pack of claim 5, wherein:
the thermally conductive resin layer is in contact with the pack frame through the opening portion.

7. The battery pack of claim 5, wherein:
battery modules of the plurality of battery modules are spaced apart from each other.

8. The battery pack of claim 5, wherein:
an area of the pack frame facing the plurality of battery modules is larger than an area of the plurality of battery modules.

9. The battery pack of claim 5, wherein:
heat generated from the battery cell stack is directly transferred to the pack frame through the thermally conductive resin layer.

10. The battery pack of claim 5, wherein:
the thermally conductive resin layer directly contacts the battery module and the pack frame.
